(19) Europäisches Patentamt
European Patent Office
Office européen des brevets

(11) **EP 4 012 904 A1**

(12) **EUROPEAN PATENT APPLICATION**
published in accordance with Art. 153(4) EPC

(43) Date of publication:
**15.06.2022 Bulletin 2022/24**

(21) Application number: **19940249.6**

(22) Date of filing: **07.08.2019**

(51) International Patent Classification (IPC):
**H02K 33/12** (2006.01)     **H02K 35/06** (2006.01)
**H02K 19/00** (2006.01)

(52) Cooperative Patent Classification (CPC):
**H02K 19/00; H02K 33/12; H02K 35/06;** Y02E 10/72

(86) International application number:
**PCT/KZ2019/000014**

(87) International publication number:
**WO 2021/025547 (11.02.2021 Gazette 2021/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bayaliev, Omir Karimovitch
Kaskelen, 50000 (KZ)**

(72) Inventor: **Bayaliev, Omir Karimovitch
Kaskelen, 50000 (KZ)**

(74) Representative: **Zahn, Matthias et al
Peter Bittner und Partner
Herrenwiesenweg 2
69207 Sandhausen (DE)**

(54) **BAYALIEV UNIVERSAL GENERATOR/MOTOR**

(57)     The invention relates to electric machines, and more particularly to both linear and rotational generator/motors. The aim of the claimed invention is to increase the amount of EMF generated, minimize the number of magnets and windings used, and maximize the use thereof throughout the entire generation cycle. The Bayaliev universal generator/motor comprises a fixed magnetic core (stator), a movable magnetic core (rotor), a magnet, and windings, wherein the fixed magnetic core contains at least one main element configured in the form of a magnet having generating windings arranged on two sides thereof such as to provide for opposite magnetic flux reversals in the windings when the movable magnetic core is moving. To strengthen the magnetic flux, an excitation winding is mounted in the region of the magnet, said excitation winding being fed by the generating windings via a rectifier. In order to control movement in motor mode, an ac voltage is fed to the generating windings and to the excitation winding from a generator having a control unit.

Fig. 8 a

**Description**

The invention relates to electric machines, in particular to generators/motors, both linear and rotational.

The principles of operation of linear and rotational generators/motors are similar.

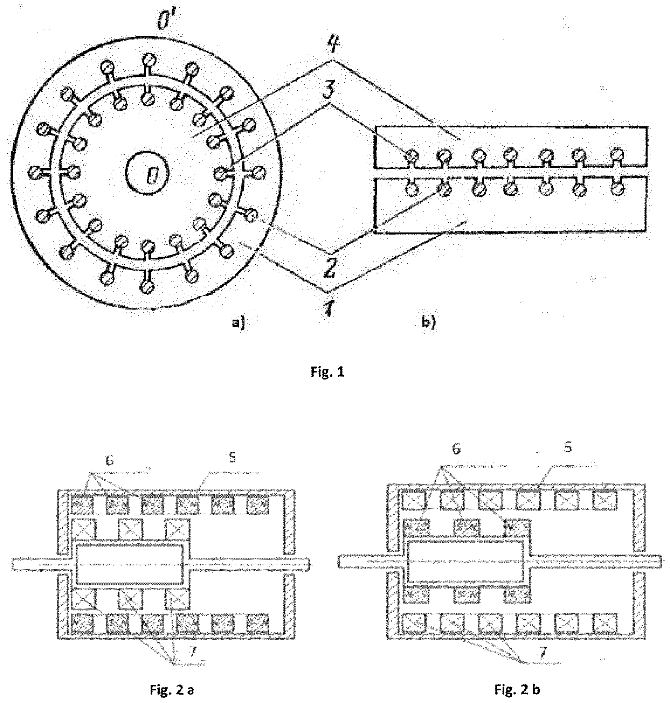

The principles of operation of these devices are shown in **Fig. 1.** These devices are reversible machines and can operate in both generator and motor modes.

**Bayaliev Universal Generator/Motor** can be both linear and rotational that differ from each other only by the type of moving trajectory of the movable magnet core.

## 1. Reciprocating motion of the movable magnetic core (rotor).

Understanding of a linear generator/motor device can be obtained if we mentally cut the stator (1) and the rotor (4) with the windings (2) and (3) of a conventional asynchronous motor along the rotational axis and unfold them into a flat plane as shown in **Fig. 1.**

The resulting "flat" design is the basic circuitry of a linear motor. When the stator windings 2 of such a motor are connected to an alternating current network, a magnetic field will be formed, the axis of which will move along the air gap with the speed V proportional to the frequency of the supply voltage **f.**

Typically, known linear generators/motors have two types of mutual arrangement of magnets and windings.

**Fig. 2 a)** shows the device consisting of a stationary body (5) (yoke) in which the permanent magnets (6) are fixed. A movable rod with fixed coils (7) with electrical windings is placed inside the body. The rod is installed in the housing in sleeve bearings (not shown in the figure) and is capable of a reciprocating motion from left to right and vice versa. When the rod moves, an EMF is induced in the windings proportionally to the rate of displacement V and the displacement amplitude $\triangle X$. The displacement results in a magnetic flux $\Phi$ transition by the value $\triangle\Phi$.

Since the windings will alternately (i.e., not simultaneously) enter the operating zones of magnets of different orientations, the function of the magnetic flux transition $\Phi$ from the magnitude of displacement in such design will look as follows.

$$\Delta \Phi = f (\Delta X)$$

The obvious disadvantage of the design is the necessity of using sliding contacts (not shown in the figure) to conduct electricity from the coils located on the moving rod.

**Fig. 2 b)** presents a similar device with a reverse arrangement of magnets and coils. The function of the magnetic field transition will be similar.

For a coil in the variable magnetic field, Faraday's law can be noted as follows:

$$E = - \triangle\Phi/ \triangle t, \text{ where}$$

**E** - electromotive force acting along an arbitrarily chosen circuit,

$\Phi$ - magnetic flux through the surface limited by this circuit,

**t** - time of the magnetic flux transition.

Alternate magnetic flux transition in traditional designs means that the magnetic field in the winding changes (increases or decreases) in one direction and then in the opposite. This leads to a slow transition in the magnetic flux inside the winding and is the main disadvantage of typical designs currently in use. A second disadvantage is a large number of magnets and windings that leads to an increase in the cost of such designs. A third disadvantage is that not all magnets and windings work simultaneously during the entire reciprocating motion cycle. **Fig. 2** shows that some of the magnets (2 pieces) or windings (2 pieces) do not always interact with each other.

The objective of the claimed invention is to increase the generated EMF, minimize the number of used magnets and windings, and maximize their utilization during the entire generation cycle.

For these purposes, a constructive arrangement of the magnet and windings in a separate base element on a fixed magnetic core is used to create an opposite magnetic flux transition in the windings. The base element consists of one magnet and two windings as will be shown later in the description.

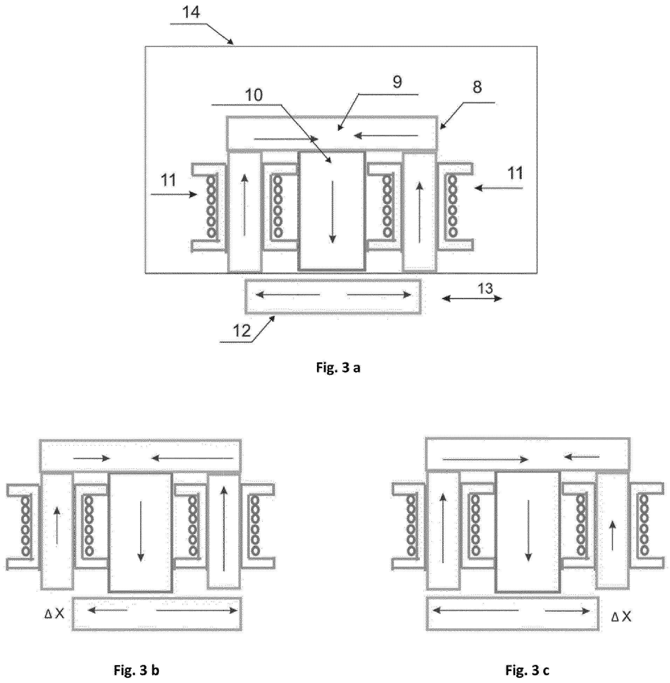

**Fig. 3 a)** displays a design free from the above disadvantages of traditional linear generators.

The design uses a base element (14) that includes a fixed magnet core (8) with a magnet (10) mounted at the midpoint (9) of the magnet core. There are 2 windings (11) at the edges of the fixed magnet core. The movable magnetic core (12) has a reciprocating motion (motion direction is item 13) on ball-bearings (not shown in the figure). The direction of the magnetic flux through the left and right windings is shown by blue arrows.

As it is shown in **Fig. 3** a), when the center of the movable magnetic core (12) is positioned against the midpoint (9), the magnetic field lines passing through the midpoint (9), where the magnet (10) is installed, are evenly distributed along the two windings (11) and are counter-directional and equal in magnitude.

A shift of the movable core (12) to the left or right by $\triangle$ X as shown in **Fig. 3** b) and c) results in magnitude variation of the magnetic resistance in the gaps between the windings (11) and the movable core (12). The variation in the magnetic resistance in the gaps leads to an opposite deviation in the magnitudes of magnetic fluxes in the right and left windings by the value of:

$$\triangle\Phi = f (\triangle X)$$

The windings are connected in series to form a single winding.

The total transition of the magnetic flux in a single winding will be:

$\triangle\Phi= f(\triangle X) - (- f (\triangle X)) = 2 f (\triangle X),$ thus increasing by a factor of 2 compared to typical designs.

In contrast to typical designs, the movable magnet core (rotor) does not generate any magnetic field but is a passive element like a ferromagnetic core in a solenoid. It switches the magnetic lines through the magnet and windings, reducing the magnetic resistance between the magnet and the right winding or the magnet and the left winding.

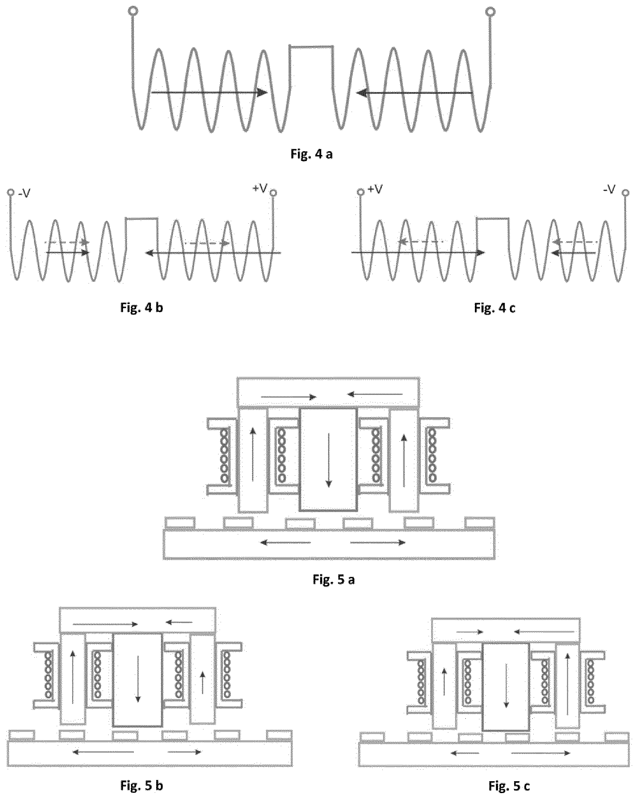

**Fig. 4** shows transitions of the magnetic fluxes in two windings connected in series in the device shown in Fig. 3. The dotted arrows show the direction of the magnetic field induced by the resulting EMF, which is always directed against the transition of magnetic flux.

**Fig. 4** a) - movable magnet core is in neutral position.

**Fig. 4** b) - movable magnet core moves to the right.

**Fig. 4** c) - movable magnet core moves to the left.

For large displacement values, a movable magnetic core with protrusions (prongs) is used, which allows providing transitions of magnetic fluxes at any value of displacement. This design is shown in **Fig. 5** a), b) and c).

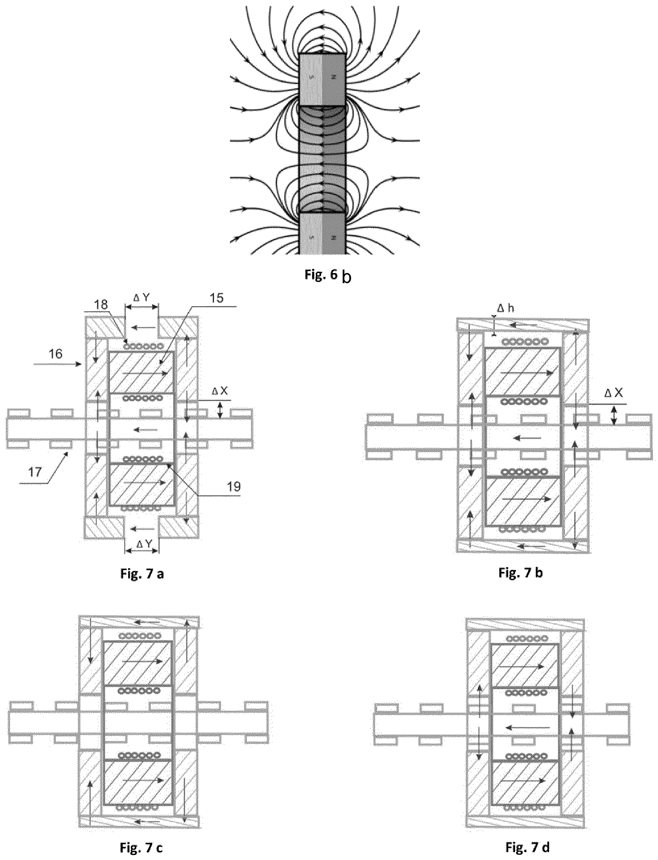

In the case of using a ring magnet and two windings, it should be noted that the magnetic lines are arranged as shown in **Fig. 6.**

The basic element will look like in **Fig. 7** a) and includes a ring magnet (15) placed in the middle of a fixed magnet core (16) which is made in the form of two rings placed in a cut cylinder with a technological gap $\triangle Y$, a movable magnet core (17), an outer winding (18) and an inner winding (19). The outer winding is placed on the outer part of the ring magnet. The inner winding is located between the inner surface of the magnet and the movable magnet core (17).

The principle of operation of this design is similar to the device shown in **Fig. 5.** Displacement of the movable magnet core changes the value of the magnetic gaps $\triangle\mathbf{X}$ and respectively the density of the magnetic field lines outside and inside of the ring magnet. This results in some magnetic field lines passing from the outside of the ring magnet into the inside and reverse. The technological gap $\triangle\mathbf{Y}$ is used to adjust the uniformity of the magnetic field lines outside and inside of the ring magnet and is set by the manufacturer. A smaller gap redistributes the lines inside the ring magnet, a larger gap redistributes the lines outside the ring magnet. It is also possible to adjust the uniformity of the magnetic field lines by changing the thickness of the cylinder wall of the fixed magnet core $\triangle\mathbf{h}$ during the manufacturing process, changing its magnetoconductivity as shown in **Fig. 7** b). As the wall thickness $\triangle \mathbf{h}$ increases, the magnetic field lines are redistributed outside of the ring magnet, while $\triangle \mathbf{h}$ decrease redistributes inside. External and internal windings are connected in series. **Fig. 7** c) and d) show the change in the density of magnetic flux lines when displacing the movable magnet core.

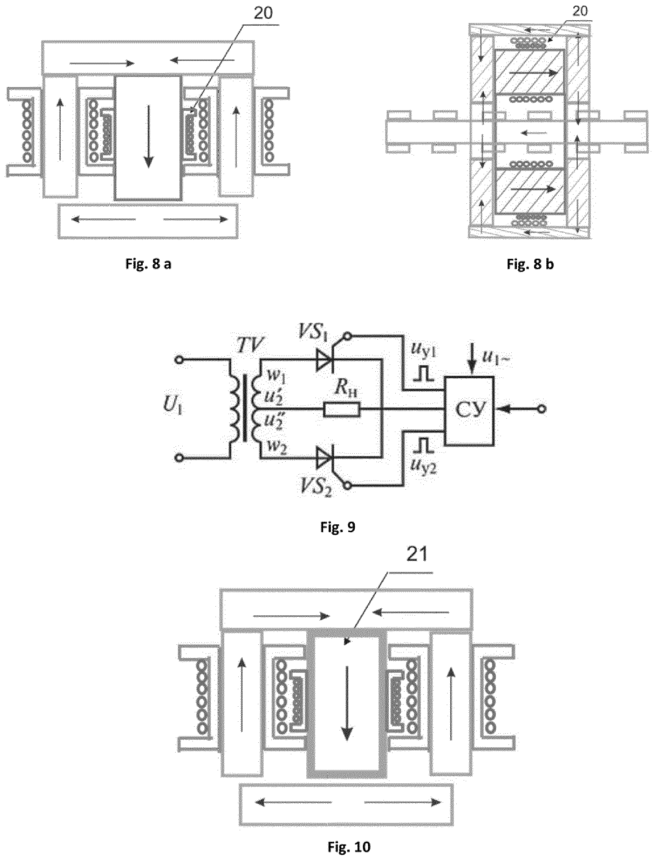

In order to increase the excitation of the magnetic field, an excitation winding (20) can be placed in the area where the permanent magnet is located as shown in **Fig. 8** a) and b). The excitation winding (20) is highlighted in red and is fed from a common generating winding through a rectifier. For example, this could be implemented through a thyristor-controlled rectifier with a typical diagram shown in **Fig. 9.**

With a magnetizing winding, the use of a permanent magnet is not necessary if a hard magnetic carbon steel material (21) that retains residual magnetization is used as shown in **Fig. 10.** This approach allows generating electricity at the initial stage of movement with further amplification of the magnetic field excitation due to the magnetizing windings. The control system unit (CS) can be used to change the control angle and time of switching on of each thyristor, and hence the average rectified voltage and current. A description of the operation of the thyristor-controlled rectifier is given on the website: https://studref.com/311612/tehnika/upravlyaemye_vypryamiteli_tiristorah **Bayaliev Universal Genera-**

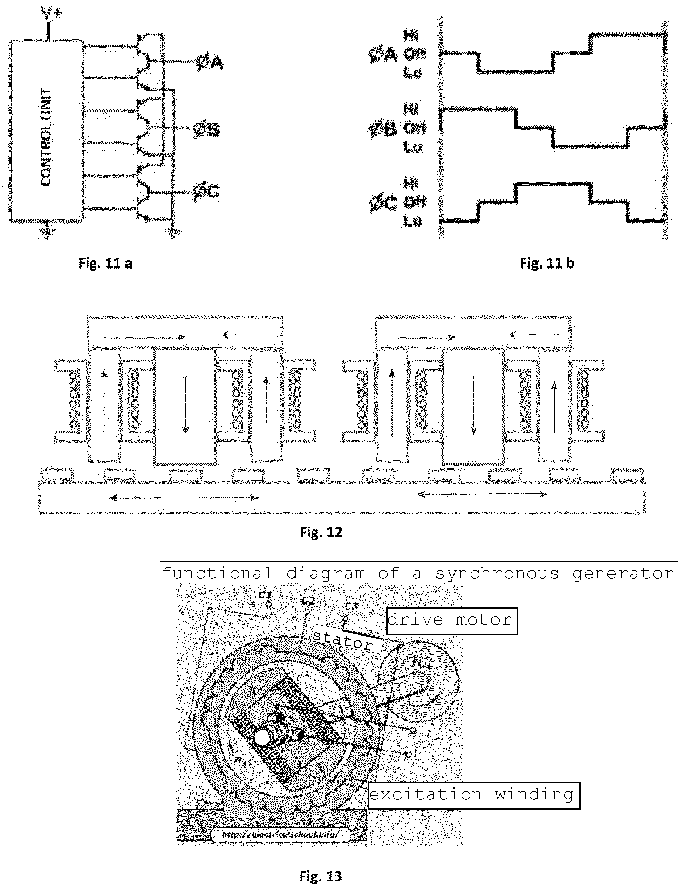

**tor/Motor** is a reversible machine and can operate in a motor mode as similar machines. In the motor mode, the alternating voltage must be applied to the generating and magnetizing windings through a generator with a control unit, shown in **Fig. 11** a). The diagrams of the alternating three-phase supply voltage are shown in **Fig. 11** b). The alternating magnetic field creates a force that drives the movable magnet core. The direction of displacement will depend on the shift between phases of the applied voltage. The speed of displacement depends on the frequency of the alternating voltage. A description of the operation of linear motors is described in detail on the website: http://leg.co.ua/info/elekticheskie-mashiny/lineynye-elektrodvigateli.html. To increase the power of the **Bayaliev Universal Generator/Motor** in both the generator and the motor modes, it is possible to install not one but several (two or more) basic elements with the same movable magnetic core as shown in **Fig. 12.** The base elements can be placed either on one or both sides of the movable core by placing additional prongs on its backside.

**2. The rotary motion of the movable magnetic core (rotor)**

**Fig. 13** shows a functional diagram of a traditionally used two-pole three-phase synchronous generator. The frequency of current f is expressed by the following relation:

$$f=N/60,$$

where **N** is the number of rotor revolutions per minute (rpm).

For generators with **p** pole pairs, the frequency of current at n/60 rpm will be **p** times greater than for a two-pole generator, i.e.

$$f=pN/60$$

Hence, the formula for determining the rotor rotation rate will be as follows:

$$N=60f/p$$

To reduce the rotation rate of the generator, at a constant current frequency f, for example in wind turbines, it is necessary to use multi-pole designs, which increases their cost as it is necessary to use from 15 to 90 pairs of poles.

In such designs, as well as in traditional linear generators, the windings will alternately (i.e., not simultaneously) enter the operating zones of magnets of different polarization and the function of the magnetic flux transition $\Phi$ vs the magnitude of displacement will look as follows:

$\triangle \Phi = f (\triangle ß),$ where **ß** is the rotor rotation angle.

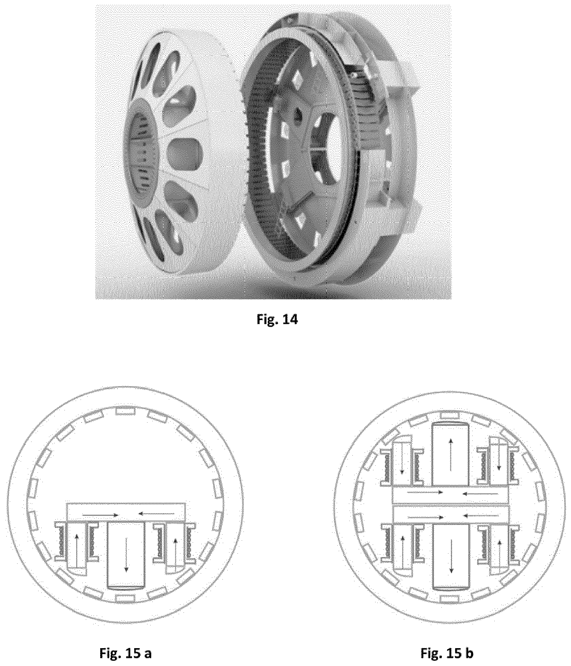

**Fig. 14** shows a multi-pole generator used in modern wind turbines. The ring rotor has independent excitation windings that form the magnetic poles, and the stator winding (right) is located on the stator.

The objective of the claimed invention is to increase the generated EMF, reduce the generator rotation rate, minimize the number of used magnets and windings, and maximize their utilization during the entire generation cycle.

**Fig. 15** a) shows a device that uses the base element in the form of two windings and one magnet. It differs from the **Bayaliev Universal Generator/Motor** shown in **Fig. 5** only in that the movable magnet core (rotor) is made in a form of a ring and can rotate around the base element on bearings. The principle of operation of the **Bayaliev Universal Generator/Motor with a rotating movable magnetic core** is similar for all examples described in the **Bayaliev Universal Generator/Motor with reciprocating motion of the movable magnetic core** section, except for the displacement trajectory of the movable magnetic core. The function of magnetic flux transition $\Phi$ from the angle of rotation will be as follows:

$$\triangle \Phi = 2 f (\triangle ß )$$

The rate of magnetic flux transition will be twice of the currently available analogues.

To increase the power and achieve a more uniform distribution of the load, it is also possible to use two or more base elements with a single movable magnetic core (rotor) as shown in **Fig. 15** b). The number of voltage phases will depend on the number of base elements. The base elements can also be located either inside or outside of the movable core with a proper arrangement of the prongs.

The output frequency will depend on the number of protrusions (prongs) on the moving element by the formula:

$$f = N*Nprong/60,$$

where

**N** - number of rotor revolutions per minute:

**Nprong** - number of prongs on the rotor.

The formula shows that to increase the output frequency of the generator it is enough to increase the number of prongs in the movable magnetic core, and, therefore, the rotor speed can be reduced by the same amount that is very important for low-speed generators used at the wind and hydropower plants. In particular, the rotational speed of the shaft of the device shown in **Fig. 15** b) at output frequency of 50 Hz will be equal to:

$$N=60f/Nprong = 60*50/20 = 3000/20 = 150 \text{ rpm}$$

**Bayaliev Universal Generator/Motor with rotational motion of the movable magnet core** is a reversible machine and can operate in a motor mode. Using three basic elements, a three-phase synchronous motor can be implemented with a typical set of rotation controls.

**Claims**

1. A Bayaliev Universal Generator/Motor that contains a stationary magnet core (stator), a movable magnet core (rotor), a magnet, and windings, wherein the stationary magnet core containing at least one base element which is assembled in a form of a magnet with the generating windings located on two sides of the magnet in a way that provides opposite magnetic flux transition in the windings when moving the movable magnet core.

2. The Bayaliev Universal Generator/Motor of claim 1, further comprising a magnetizing winding to increase the magnetic flux in a magnet location zone, the magnetizing winding is fed from the generating windings through a rectifier.

3. The Bayaliev Universal Generator/Motor of claims 1 and 2, wherein a hard-magnetic material is used instead of a magnet.

4. The Bayaliev Universal Generator/Motor of claims 1, 2 and 3, wherein in a motor mode, an alternating voltage from a generator with a control unit is applied to the generating and the magnetizing windings to control a displacement.

**Fig. 1**

**Fig. 2 a**

**Fig. 2 b**

Fig. 3 a

Fig. 3 b

Fig. 3 c

Fig. 4 a

Fig. 4 b

Fig. 4 c

Fig. 5 a

Fig. 5 b

Fig. 5 c

Fig. 6 b

Fig. 7 a

Fig. 7 b

Fig. 7 c

Fig. 7 d

Fig. 8 a

Fig. 8 b

Fig. 9

Fig. 10

V+

CONTROL UNIT

ØA

ØB

ØC

**Fig. 11 a**

ØA Hi Off Lo

ØB Hi Off Lo

ØC Hi Off Lo

**Fig. 11 b**

**Fig. 12**

functional diagram of a synchronous generator

C1  C2  C3

drive motor

stator

N

S

$n_1$

$n_1$

excitation winding

http://electricalschool.info/

**Fig. 13**

**Fig. 14**

**Fig. 15 a**

**Fig. 15 b**

## INTERNATIONAL SEARCH REPORT

| | International application No. |
|---|---|
| | PCT/KZ 2019/000014 |

**A. CLASSIFICATION OF SUBJECT MATTER**

H02K 33/12 (2006.01); H02K 35/06 (2006.01); H02K 19/00 (2006.01)

According to International Patent Classification (IPC) or to both national classification and IPC

**B. FIELDS SEARCHED**

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

Espacenet, PatSearch, PAJ, WIPO, USPTO, RUPTO

**C. DOCUMENTS CONSIDERED TO BE RELEVANT**

| Category* | Citation of document, with indication, where appropriate, of the relevant passages | Relevant to claim No. |
|---|---|---|
| X | JPS 60106356 A (AMADA CO LTD) 11.06.1985, the abstract, points 1-4 of the claims | 1 |
| Y | | 2-4 |
| Y | RU 2435285 C2 (KARASEV Y et al.) 27.11.2011, p. 5, lines 1-5, fig. 1-3 | 2, 3 |
| Y | RU 2274944 C1 (LIPETSK STATE TECHNICAL UNIVERSITY) 20.04.2006, the abstract | 4 |
| A | JPS5246413 A (NIPPON TELEGRAPH & TELEPHONE) 13.04.1977 | 1-4 |

☐ Further documents are listed in the continuation of Box C.    ☐ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 27 December 2019 (27.12.2019) | 09 January 2020 (09.01.2020) |

| Name and mailing address of the ISA/ RU | Authorized officer |
|---|---|
| | |
| Facsimile No. | Telephone No. |

Form PCT/ISA/210 (second sheet) (April 2005)